# EUROPÄISCHE PATENTANMELDUNG

(11) **EP 1 787 898 A1**
(43) Veröffentlichungstag der Anmeldung: **23.05.2007**
(21) Anmeldenummer: 06022806.1
(22) Anmeldetag: 02.11.2006
(51) Int. Cl.: B62J 1/18

(54) **Motorradsitz**

(30) Priorität: 22.11.2005 DE 102005055921
(71) Anmelder: Schwarz, Herbert, 78078 Niedereschach (DE); Schanz, Jochen, 78078 Niedereschach (DE); Dorn, Karl-Heinz, 72406 Bisingen (DE); Dorn, Monika, 72406 Bisingen (DE)
(72) Erfinder: Schwarz, Herbert, 78078 Niedereschach (DE); Schanz, Jochen, 78078 Niedereschach (DE); Dorn, Karl-Heinz, 72406 Bisingen (DE); Dorn, Monika, 72406 Bisingen (DE)
(74) Vertreter: Patentanwälte Westphal, Mussgnug & Partner

(57) **Zusammenfassung**

Ein Motorradsitz in Form einer Sitzbank ist aufgebaut aus einem Sitzkörper (12), der als Kunststoffschaum-Formteil hergestellt ist, aus einer auf der Sitzfläche des Sitzkörpers (12) aufgebrachten Polsterlage (14) aus einem offenporigen Polyether-Schaumstoff, einer auf der Polsterlage (14) angeordneten Atmungslage (16) auf einem Abstandsgewirke und aus einem Bezug (18), der eine atmungsaktive und wasserdichte Membran aufweist.

## Beschreibung

Die Erfindung betrifft einen Motorradsitz, insbesondere in Form einer Sitzbank.

Motorradsitze, die insbesondere bei Sportmaschinen als Sitzbank ausgebildet sind, bestehen aus einem Sitzkörper, der gepolstert und mit einem Bezug bedeckt ist. In den meisten Fällen besteht der Bezug aus einem Kunststoff, was insbesondere bei längeren Fahrten unter entsprechenden klimatischen Bedingungen, z.B. bei Motorradrallyes oder -touren wegen der durch den Kunststoff verursachten Schweißentwicklung unangenehm werden kann. Bessere Eigenschaften weisen Bezüge aus Leder auf. Weiter ist es üblich, die Sitzbank zusätzlich mit einem Fell zu bedecken. Diese Maßnahmen führen zwar zu einer Verbesserung, können jedoch die unangenehme Wärmeentwicklung und Schweißbildung nicht ausreichend vermeiden.

Der Erfindung liegt daher die Aufgabe zu Grunde, einen Motorradsitz, insbesondere eine Sitzbank zu schaffen, die den Sitz-komfort insbesondere bei längeren Fahrten und hohen Temperaturen verbessert. Diese Aufgabe wird erfindungsgemäß gelöst durch einen Motorradsitz mit den Merkmalen des Patentanspruchs 1.

Vorteilhafte Ausführungen der Erfindung sind in den Unteransprüchen angegeben.

Der erfindungsgemäße Motorradsitz, vorzugsweise in Form einer Sitzbank weist einen Sitzkörper auf, auf dessen Sitzfläche eine Polsterlage aus einem offenporigen Polyether-Schaumstoff aufgebracht ist. Der Bezug weist eine atmungsaktive wasserdichte Membran auf. Die Ausbildung des Bezugs mit einer atmungsaktiven Membran und die sich unter diesem Bezug befindende Polsterlage aus einem offenporigen Polyetherschaumstoff ermöglichen eine Luftzirkulation durch die Sitzfläche, die insbesondere noch dadurch begünstigt wird, dass durch die unterschiedliche Belastung der Sitzfläche durch den Fahrer bei Bodenunebenheiten eine Pumpwirkung auf den offenporigen Schaumstoff der Polsterlage ausgeübt wird. Diese Luftzirkulation wirkt einem Hitzestau an der Sitzfläche und einer dadurch verursachten Schweißbildung entgegen. Da der Bezug wasserdicht ist, schützt er die Polsterlage und den Sitzkörper vor einem Eindringen von Feuchtigkeit und Schmutz.

In einer bevorzugten Ausführung ist auf der Polsterlage zusätzlich noch eine Atmungslage aus einem Abstandsgewirke angeordnet. Dieses Abstandsgewirke stellt einen elastisch nachgiebigen Hohlraum dar, der sich einerseits optimal dem Körper des Fahrers anpasst und andererseits eine nahezu ungehinderte Luftzirkulation ermöglicht.

Der Bezug ist vorzugsweise aus zwei unterschiedlichen Materialien hergestellt. Die Sitzfläche des Bezugs weist eine größere Stärke und eine höhere Strapazlerfähigkeit auf, da dieser Bereich des Bezugs einem stärkeren Verschleiß durch den Fahrer ausgesetzt ist. Die Seitenflächen des Bezugs bestehen dagegen aus einem Material höherer Elastizität. Die Seitenflächen werden weniger stark durch Reibung und Verschleiß beansprucht, sind aber einer stärkeren Verformung unterworfen, wenn sich die Höhe des Sitzes auf Grund der wechselnden Kompression durch das Gewicht des Fahrers ändert. Die unterschiedlichen Materialien der Sitzfläche und der Seitenfläche sind miteinander vernäht, wobei die Nähte wasserdicht versiegelt sind, um auch an diesen Nähten ein Eindringen von Feuchtigkeit auszuschließen.

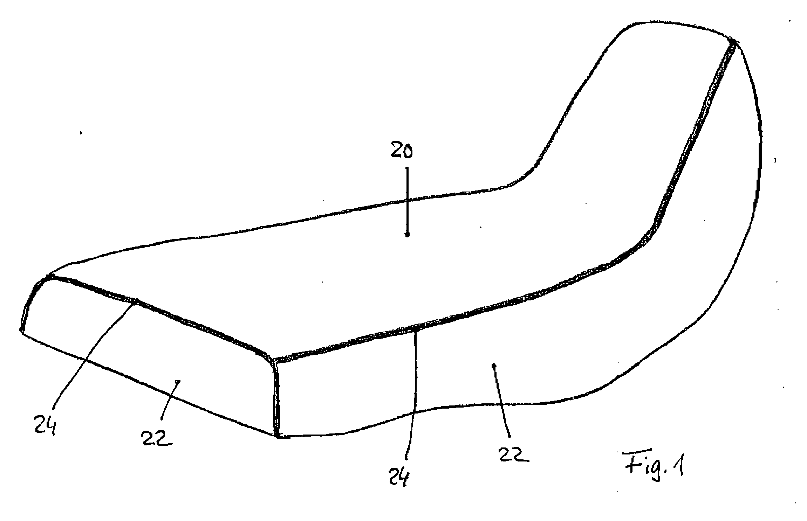

Im Folgenden wird die Erfindung anhand eines in der Zeichnung dargestellten Ausführungsbeispiels näher beschrieben. Es zeigen
- Fig. 1: in perspektivischer Ansicht eine Sitzbank und

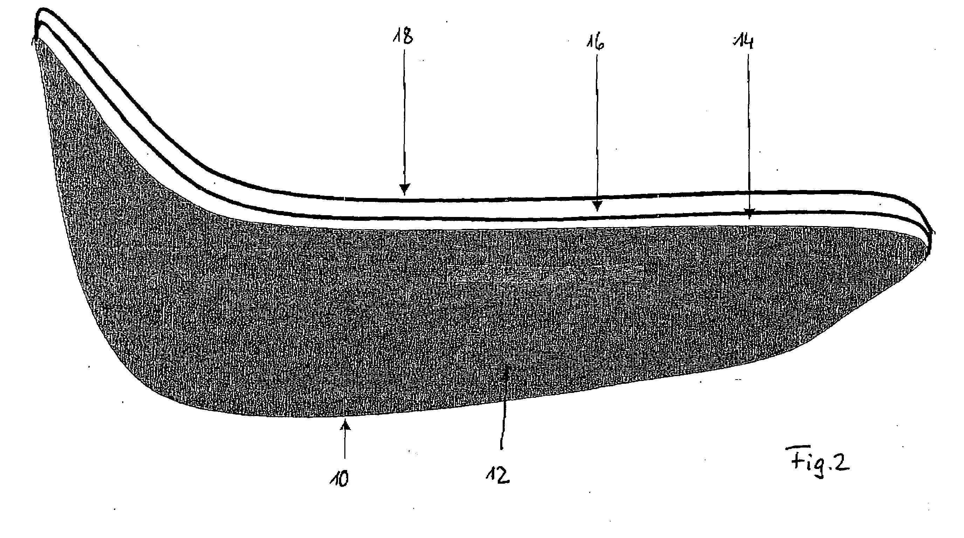

- Fig. 2: einen vertikalen Längsschnitt durch diese Sitzbank.

Der Motorradsitz, der in dem dargestellten Ausführungsbeispiel als Sitzbank ausgebildet ist, weist einen in der Zeichnung nur schematisch angedeuteten Träger 10 auf, der zur Befestigung der Sitzbank an dem Motorrad dient. Der Träger 10 besteht aus Metall oder Kunststoff, vorzugsweise aus einem glasfaserverstärkten Kunststoff.

Auf dem Träger 10 ist ein Sitzkörper 12 angebracht, der im Wesentlichen die Form und die Höhe der Sitzbank bestimmt. Der Sitzkörper 12 ist ein Formteil, welches vorzugsweise aus Polyurethan-Schaumstoff besteht. Der Sitzkörper 12 kann dabei als Kaltschaum hergestellt werden. Wegen der hohen Belastbarkeit, der Festigkeit, der langen Lebensdauer und der dauerhaften Elastizität wird ein Sitzkörper 12 aus einem Verbundschaumstoff bevorzugt. Ein solcher Verbundschaumstoff kann eine Rohdichte von etwa 100 bis 140 kg/m³ und eine Stauchhärte von etwa 10 bis 30 kPa aufweisen.

Auf die Oberseite des Sitzkörpers 12, die die Sitzfläche der Sitzbank bildet, wird eine Polsterlage 14 aufgebracht. Die Polsterlage 14 besteht aus einem hochelastischen offenporigen Polyether-Schaumstoff. Dieser Polyether-Schaumstoff hat vorzugsweise eine Rohdichte von etwa 30 bis 45 kg/m³ und eine Stauchhärte von etwa 5 bis 9 kPa. Die Dicke der Polsterlage 14 beträgt vorzugsweise etwa 4 bis 12 cm. Auf Grund ihrer Dicke und ihrer Elastizität kann sich die Polsterlage 14 dem Körper des auf der Sitzbank sitzenden Fahrers optimal anpassen, beeinträchtigt jedoch nicht die stabile Abstützung des Fahrers durch den Sitzkörper 12. Die Polsterlage 14 bedeckt die Oberseite des Sitzkörpers 12 flächendeckend.

Auf der Polsterlage 14 ist eine Atmungslage 16 aus einem Abstandsgewirke angeordnet. Auch diese Atmungslage 16 bedeckt die Polsterlage 14 und damit die Oberseite des-Sitzkörpers 12 flächengleich. Das Abstandsgewirke der Atmungslage 16 besteht aus zwei textilen Außenflächen, die durch Abstandsfäden verbunden und gleichzeitig auf Distanz gehalten werden. Die textilen Außenflächen sind luftdurchlässig. Die Abstandsfäden halten die textilen Außenflächen elastisch federnd auf Distanz, sodass einerseits ein großvolumiger Zwischenraum zwischen den textilen Außenflächen freigehalten wird und andererseits die gesamte Atmungslage elastisch komprimierbar ist. Das Abstandsgewirke der Atmungslage weist vorzugsweise eine Dicke von etwa 8 bis 12 mm auf.

Der gesamte Aufbau der Sitzbank wird zumindest auf der oberen Sitzfläche und den Seitenflächen von einem Bezug 18 bedeckt. Der Bezug 18 weist eine atmungsaktive wasserdichte Membran auf. Diese Membran besteht beispielsweise aus einem hydrophoben expandiertem Polytetrafluorethylen mit einer integrierten ölabweisenden Substanz. Diese Membran macht den Bezug 18 durchlässig für Luft und Feuchtigkeitsdampf, verhindert jedoch ein Eindringen von Feuchtigkeit und Verschmutzungen wie zum Beispiel Öl oder dergleichen.

Der Bezug 18 ist vorzugsweise aus zwei unterschiedlichen Materialien hergestellt, die jedoch beide die atmungsaktive und wasserdichte Membran aufweisen. In dem die obere Sitzfläche bedeckenden Bereich 20 des Bezugs 18 wird ein Material verwendet, welches eine größere Stärke und eine höhere Strapazierfähigkeit aufweist. Die die Seitenflächen der Sitzbank bedeckenden Bereiche 22 des Bezugs 18 sind dagegen aus einem Material hergestellt, welches insbesondere eine höhere Elastizität aufweist. Die Bereiche 20 und 22 sind zur Bildung des gesamten Bezugs 18 miteinander vernäht, wobei die Nähte 24 wasserdicht ausgebildet sind, zum Beispiel versiegelt, verklebt oder verschweißt.

Der Bezug 18, die Atmungslage 16 und die Polsterlage 14 bilden eine Bedeckung der Sitzfläche der Sitzbank, die eine elastische Polsterung bewirkt und eine hohe Luftdurchlässigkeit und ein relativ großes Luftaufnahmevolumen aufweist. Der Bezug 18 bedeckt dabei die Sitzbank wasserdicht und schmutzabweisend.

Bezugszeichenliste
- 10: Träger
- 12: Sitzkörper
- 14: Polsterlage
- 16: Atmungslage
- 18: Bezug
- 20: Sitzfläche von 18
- 22: Seitenflächen von 18
- 24: Nähte

## Patentansprüche

1. Motorradsitz, insbesondere in Form einer Sitzbank, mit einem Sitzkörper (12), der als Kunststoffschaum-Formteil, insbesondere aus Polyurethan hergestellt ist, mit einer auf der oberen Sitzfläche des Sitzkörpers (12) aufgebrachten Polsterlage (14) aus einem offenporigen Polyether-Schaumstoff und mit einem zumindest die Sitzfläche und die Seitenflächen bedeckenden Bezug (18), der eine atmungsaktive wasserdichte Membran aufweist.

2. Motorradsitz nach Anspruch 1, bei welchem der Polyether-Schaumstoff der Polsterlage (14) hochelastisch ist.

3. Motorradsitz nach Anspruch 2, bei welchem der Polyether-Schaumstoff eine Rohdichte von etwa 30 bis 45 kg/m³ und eine Stauchhärte von etwa 5 bis 9 kPa aufweist..

4. Motorradsitz nach einem der Ansprüche 1 bis 3, bei welchem die Polsterlage (14) eine Dicke von 4 bis 12 cm aufweist.

5. Motorradsitz nach einem der vorhergehenden Ansprüche, bei welchem auf der Polsterlage (14) eine Atmungslage (16) aus einem Abstandsgewirke angeordnet ist.

6. Motorradsitz nach Anspruch 5, bei welchem das Abstandsgewirke eine Dicke von etwa 8 bis 12 mm aufweist.

7. Motorradsitz nach einem der vorhergehenden Ansprüche, bei welchem die Membran des Bezugs (18) aus einem hydrophoben expandierten Polytetrafluorethylen mit einer integrierten ölabweisenden Substanz besteht.

8. Motorradsitz nach einem der vorhergehenden Ansprüche, bei welchem der die Sitzfläche des Bezugs (18) bildende Bereich (20) eine größere Stärke und eine höhere Strapazierfähigkeit aufweist und der die Seitenflächen des Bezugs (18) bildende Bereich (22) eine höhere Elastizität aufweist.

9. Motorradsitz nach Anspruch 8, bei welchem der die Sitzfläche bildende Bereich (20) und die die Seitenflächen bildenden Bereiche (22) des Bezugs (18) durch wasserdichte Nähte (24) miteinander verbunden sind.
